# EUROPEAN PATENT APPLICATION

(11) **EP 3 399 800 A1**
(43) Date of publication of application: **07.11.2018**
(21) Application number: 16880565.3
(22) Date of filing: 25.07.2016
(51) Int. Cl.: H04W 48/16, H04W 12/06, H04W 84/12

(54) **INFORMATION PROCESSING METHOD, SERVER AND HOTSPOT DEVICE**

(30) Priority: 29.12.2015 CN 201511018125
(71) Applicant: ZTE Corporation, Shenzhen, Guangdong 518057 (CN)
(72) Inventor: ZHANG, Jingrui, Shenzhen, Guangdong 518057 (CN); FU, Xiaodong, Shenzhen, Guangdong 518057 (CN)
(74) Representative: Nordmeyer, Philipp Werner
(86) International application number: PCT/CN2016/091550
(87) International publication number: WO 2017/113770

(57) **Abstract**

An information processing method, including: segmenting a configuration profile to obtain all segmented profiles of the configuration profile; numbering all of the segmented profiles according to an order of each segmented profile in the configuration profile; and encoding each of the numbered segmented profiles to generate an encoded picture for each of the numbered segmented profiles, respectively. A hotspot device and a server are further disclosed herein.

## Description

### TECHNICAL FIELD

The present application relates to, but is not limited to the field of Internet technologies, and in particular, to an information processing method, a server, and a hotspot device.

### BACKGROUND

With the rapid development of mobile Internet, use of mobile devices such as mobile phones and tablet PCs in accessing the Internet has become more and more widespread in people's daily lives. People may access the Internet through a Wireless-Fidelity (WiFi) connection. In the existing art, a user needs to search for a wireless network and enter a password in order to connect to a WiFi hotspot. In this case, the operation is complicated.

In order to allow a user to connect to a WiFi hotspot more conveniently and quickly, a technology of scanning a Quick Response (QR) code for accessing is introduced. A user may access a WiFi hotspot by scanning a QR code. However, a terminal with an iOS system does not support scanning QR codes to access to a WiFi hotspot. In the existing art, although the terminal with the iOS system may access a WiFi hotspot through scanning a QR code by other devices, network connection would be needed for the terminal to obtain a configuration profile upon scanning of the QR code, so as to access the WiFi hotspot by scanning the QR code.

### SUMMARY

The following is an overview of the subject matter described in detail herein. This summary is not intended to limit the scope of the claims.

Embodiments of the present disclosure provide an information processing method, a server, and a hotspot device. By performing segmenting and encoding processing on a configuration profile, a terminal can obtain the configuration profile to access a WiFi hotspot in absence of a network connection.

In a first aspect, an embodiment of the present disclosure provides an information processing method, including: segmenting a configuration profile to obtain all segmented profiles of the configuration profile; numbering all of the segmented profiles according to an order of each segmented profile in the configuration profile; and encoding each of the numbered segmented profiles to generate an encoded picture for each of the numbered segmented profiles, respectively.

Optionally, before the step of segmenting the configuration profile to obtain all of the segmented profiles of the configuration profile, the method further includes: obtaining the configuration profile signed by a server.

Optionally, before the step of obtaining the configuration profile signed by the server, the method further includes: generating the configuration profile according to a service set identifier (SSID) and a password, and uploading the configuration profile to the server, such that the configuration profile is signed by the server.

Optionally, after the step of encoding each of the numbered segmented profiles to generate the encoded picture for each of the numbered segmented profiles, respectively, the method further includes: displaying the encoded picture for each of the numbered segmented profiles cyclically with a periodicity, such that the signed configuration profile is obtained by a user terminal device according to the encoded picture.

Optionally, before the step of segmenting the configuration profile to obtain all of the segmented profiles of the configuration profile, the method further includes: obtaining the configuration profile, and signing the configuration profile.

In a second aspect, an embodiment of the present disclosure further provides an information processing method, including: obtaining a signed configuration profile, and processing the signed configuration profile, such that a hotspot is connected by a user terminal device according to the processed signed configuration profile.

Optionally, the step of processing the signed configuration profile includes: segmenting the signed configuration profile to obtain all segmented profiles of the configuration profile; numbering all of the segmented profiles according to an order of each segmented profile in the configuration profile; and encoding each of the numbered segmented profiles to generate an encoded picture for each of the numbered segmented profiles, respectively.

In a third aspect, an embodiment of the present disclosure further provides a hotspot device, including: a first processing unit, a first obtaining unit, and a first encoding unit, wherein the first processing unit is configured to segment a configuration profile; the first obtaining unit is configured to obtain all segmented profiles of the configuration profile; the first processing unit is further configured to number all of the segmented profiles according to an order of each segmented profile in the configuration profile; and the first encoding unit is configured to encode each of the numbered segmented profiles to generate an encoded picture for each of the numbered segmented profiles, respectively.

Optionally, the first obtaining unit is further configured to obtain the configuration profile signed by a server.

Optionally, the hotspot device further includes: a first transmitting unit, wherein the first processing unit is further configured to generate the configuration profile according to a service set identifier (SSID) and a password; and the first transmitting unit is configured to upload the configuration profile to the server, such that the configuration profile is signed by the server.

Optionally, the hotspot device further includes: a first displaying unit configured to display the encoded picture for each of the numbered segmented profiles cyclically with a periodicity, such that the signed configuration profile is obtained by a user terminal device according to the encoded picture.

In a fourth aspect, an embodiment of the present disclosure further provides a server, including: a first processing unit, a first obtaining unit, and a first encoding unit, wherein the first processing unit is configured to segment a configuration profile; the first obtaining unit is configured to obtain all segmented profiles of the configuration profile; the first processing unit is further configured to number all of the segmented profiles according to an order of each segmented profile in the configuration profile; and the first encoding unit is configured to encode each of the numbered segmented profiles to generate an encoded picture for each of the numbered segmented profiles, respectively.

Optionally, the first obtaining unit is further configured to obtain the configuration profile and sign the configuration profile.

In a fifth aspect, an embodiment of the present disclosure further provides a hotspot device, including: a second obtaining unit and a second processing unit, wherein the second acquiring unit is configured to obtain a signed configuration profile; and the second processing unit is configured to process the signed configuration profile, such that a hotspot is connected by the user terminal device according to the processed signed configuration profile.

Optionally, the second processing unit is configured to: segment a signed configuration profile to obtain all segmented profiles of the configuration profile; number all of the segmented profiles according to an order of each segmented profile in the configuration profile; and encode each of the numbered segmented profiles to generate an encoded picture for each of the numbered segmented profiles, respectively.

In a sixth aspect, an embodiment of the present disclosure further provides a server, including: a second obtaining unit and a second processing unit, wherein the second acquiring unit is configured to obtain a signed configuration profile; and the second processing unit is configured to process the signed configuration profile, such that a hotspot is connected by the user terminal device according to the processed signed configuration profile.

Optionally, the second processing unit is configured to: segment a signed configuration profile to obtain all segmented profiles of the configuration profile; number all of the segmented profiles according to an order of each segmented profile in the configuration profile; and encode each of the numbered segmented profiles to generate an encoded picture for each of the numbered segmented profiles, respectively.

An embodiment of the present disclosure further provides a computer-readable storage medium storing computer executable instructions for implementing the information processing method of the first aspect when executed.

An embodiment of the present disclosure further provides a computer-readable storage medium storing computer executable instructions for implementing the information processing method of the second aspect when executed.

Embodiments of the present disclosure provide an information processing method, a server, and a hotspot device, wherein a configuration profile is segmented to obtain all segmented profiles of the configuration profile; all of the segmented profiles are numbered according to an order of each segmented profile in the configuration profile; and each of the numbered segmented profiles is encoded to generate an encoded picture for each of the numbered segmented profiles, respectively. According to the information processing method, the server, and the hotspot device provided by embodiments of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of networking.

Other aspects may be understood after reading and understanding the drawings and detailed description.

### BRIEF DESCRIPTION OF THE DRAWINGS

FIG. 1 is a first schematic flowchart of an information processing method according to an embodiment of the present disclosure;
FIG. 2 is a second schematic flowchart of the information processing method according to an embodiment of the present disclosure;
FIG. 3 is a third schematic flowchart of the information processing method according to an embodiment of the present disclosure;
FIG. 4 is a fourth schematic flowchart of the information processing method according to an embodiment of the present disclosure;
FIG. 5 is a fifth schematic flowchart of the information processing method according to an embodiment of the present disclosure;
FIG. 6 is a first schematic structural diagram of a hotspot device according to an embodiment of the present disclosure;
FIG. 7 is a second schematic structural diagram of the hotspot device according to an embodiment of the present disclosure;
FIG. 8 is a first schematic structural diagram of a server according to an embodiment of the present disclosure;
FIG. 9 is a first schematic structural diagram of a first terminal device according to an embodiment of the present disclosure;
FIG. 10 is a second schematic structural diagram of the first terminal device according to an embodiment of the present disclosure;
FIG. 11 is a third schematic structural diagram of the hotspot device according to an embodiment of the present disclosure;
FIG. 12 is a second schematic structural diagram of the server according to an embodiment of the present disclosure; and
FIG. 13 is a third schematic structural diagram of the first terminal device according to an embodiment of the present disclosure.

### DETAILED DESCRIPTION

The technical solutions of the embodiments of the present disclosure will be described clearly and completely with reference to the accompanying drawings in the embodiments of the present disclosure.

### Embodiment 1

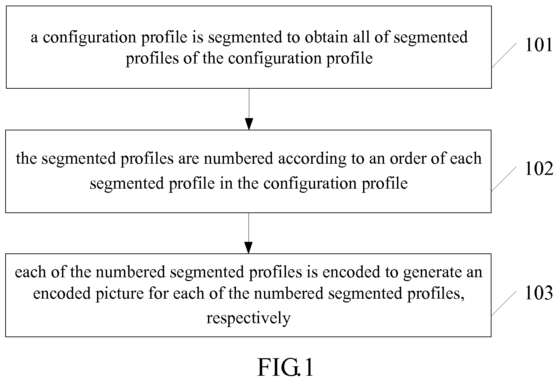

An embodiment of the present disclosure provides an information processing method. As illustrated in FIG. 1, the method may include the following steps 101 to 103.

At step 101, a configuration profile is segmented to obtain all segmented profiles of the configuration profile.

It should be noted that an execution body of the information processing method provided in an embodiment of the present disclosure may be an information processing device. The information processing device may be a hotspot device, or may be a server, or may be a first terminal communicating with a server.

The information processing device obtains a signed configuration profile, and then segments the signed configuration profile according to a size of the configuration profile to obtain all of the segmented profiles of the configuration profile.

Exemplarily, take a QR code as an example for illustration. According to the information processing method provided in an embodiment of the present disclosure the configuration profile for the QR coding may be segmented according to the size of the signed configuration profile for the QR coding to obtain multiple segmented profiles, i.e., multiple picture files of QR code.

Exemplarily, the size of the signed configuration profile for the QR coding is 20 KB, the configuration profile is encoded in hexadecimal and segmented into 20 QR code pictures.

The configuration profile is also referred to as a configuration file. The configuration profile in an embodiment of the present disclosure is an Extensible Markup Language (XML) file that may be recognized by the iOS system, and the XML file allows publish of configuration information by a developer. The profile may configure multiple settings such as WiFi according to its own needs. The iOS system may recognize the configuration profile in the XML format, which generally has a suffix name of .mobileconfig. The XML file contains multiple fields of WiFi information. These fields contain information such as SSID (Service Set Identifier) and a password of a WiFi hotspot, which may enable connection to the WiFi hotspot once being installed by a user terminal.

At step 102, the segmented profiles are numbered according to an order of each segmented profile in the configuration profile.

The information processing device numbers all of the segmented profiles according to the order of each segmented profile in the configuration profile, that is, an order number is set for each segmented profile to indicate the order of each segmented profile, thus facilitating subsequent assembling according to an order of the number.

Exemplarily, an order number is set for each segmented QR code picture to indicate the order of each segmented QR code picture. If the size of the signed configuration profile is 20 KB, the configuration profile would be encoded in hexadecimal and segmented into 20 QR code pictures, wherein each QR code picture is numbered as 1 to 20, respectively.

At step 103, each of the numbered segmented profiles is encoded to generate an encoded picture for each of the numbered segmented profiles respectively.

After each numbered segmented profile is obtained by the information processing device, each of the segmented profiles is encoded, respectively, to obtain an encoded picture for each of the numbered segmented profiles. The information processing method provided in the embodiment of the present disclosure may use a relevant encoding method to encode the segmented profile to obtain the encoded picture for the segmented profiles.

In the information processing method provided in an embodiment of the present disclosure, a configuration profile of a QR code may be used as an information carrier, and other custom picture may also be used as an information carrier. For example, a picture having grayscale stripes divided into 16 gray levels for representing hexadecimal information may be used. In segmenting and numbering processes, pictures for each information carrier may be numbered to facilitate subsequent assembling according to an order of the number.

The application of the information processing method provided in an embodiment of the present disclosure is not limited to the iOS system. If other systems also need to install a required profile before connecting to a WiFi hotspot, the information processing method provided in an embodiment of the present disclosure may also generate a profile with a corresponding format as required, such that other systems may connect to a WiFi hotspot according to the profile in the corresponding format.

According to the information processing method provided by an embodiment of the present disclosure, the data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 2

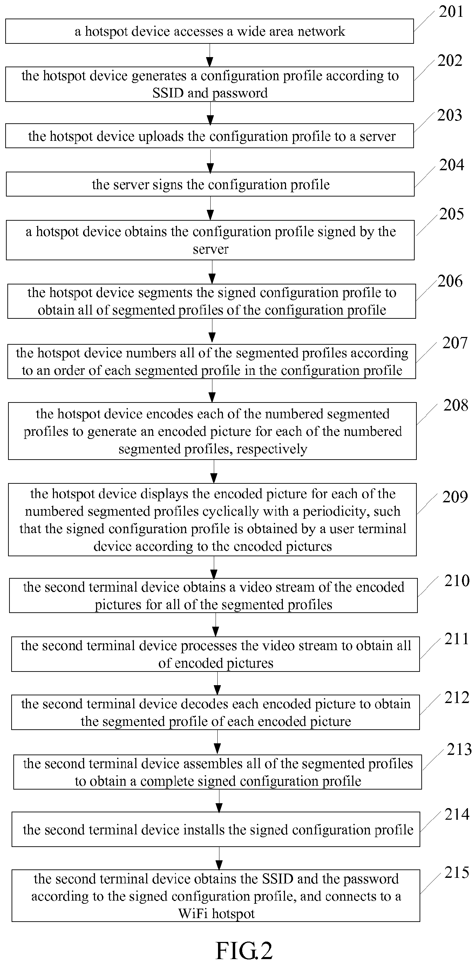

An embodiment of the present disclosure provides an information processing method. As illustrated in FIG. 2, the method may include the following steps 201 to 215.

At step 201, a hotspot device accesses a wide area network.

The hotspot device in the embodiment of the present disclosure may have the functions of wireless local area network (WLAN) access, wide area network communication, and the like. The hotspot device also needs to have functions of generating a configuration profile, cooperating with a server to sign the configuration profile, and the like. The hotspot device may be understood as mobile WiFi.

A wide area network (WAN) may also be referred to as a long haul network, and generally spans a large physical area covering a range of several tens to several thousands of kilometers. The WAN may connect multiple cities or countries, or span across several continents to provide long range communications, thus forming an international remote network. The WAN cover a wider area than both local area networks (LANs) and metropolitan area networks (MANs). A communication sub-network of the WAN mainly uses the packet switching technology. The communication sub-network of the WAN may interconnect LANs or computer systems distributed in different regions for resource sharing, by utilizing public packet switching network, satellite communication network and wireless packet switching network. For example, the Internet is the largest WAN in the world.

At step 202, the hotspot device generates a configuration profile according to SSID and a password.

The service set identifier (SSID) technology may divide a wireless local area network into several sub-networks requiring different authentication. Each of the sub-networks needs an independent authentication, and only an authenticated user may access a corresponding sub-network, thus preventing unauthorized users from entering.

The configuration profile is also referred to as a configuration file. The configuration profile in the embodiment of the present disclosure is an Extensible Markup Language (XML) file recognizable by the iOS system, and the XML file allows publish of configuration information by a developer. The profile may configure multiple settings such as WiFi settings according to its own needs.

At step 203, the hotspot device uploads the configuration profile to a server.

The server in the embodiment of the present disclosure may be a cloud server. The cloud server is a simple, high-efficiency, safe and reliable computing service with flexible and scalable processing capabilities.

At step 204, the server signs the configuration profile.

Take a cloud server as an example for illustration. In an embodiment of the present disclosure, the cloud server may use a Certification Authority (CA) certificate for signature authentication. Firstly, a CA-signed certificate needs to be applied and placed on the cloud server. After reception of the configuration profile sent by the hotspot device, the cloud server signs with the CA-signed certificate, and then transmits the signed configuration profile to the hotspot device. The configuration profile stalled after being signed will be displayed as authenticated, and the user will consider the profile as trustworthy. Conversely, unsigned profiles will be displayed as unsigned, and the user may consider it as unsafe.

At step 205, a hotspot device obtains the configuration profile signed by the server.

The hotspot device downloads the signed configuration profile locally.

At step 206, the hotspot device segments the signed configuration profile to obtain all segmented profiles of the configuration profile.

Take a QR code as an example for illustration. The information processing method provided in an embodiment of the present disclosure may segment the configuration profile for the QR coding according to the size of the signed configuration profile for the QR coding to obtain multiple segmented profiles, i.e., multiple picture files for QR code.

Exemplarily, the size of the signed configuration profile for the QR coding is 20 KB, and the configuration profile is encoded in hexadecimal and segmented into 20 QR code pictures.

At step 207, the hotspot device numbers all of the segmented profiles according to an order of each segmented profile in the configuration profile.

Exemplarily, an order number is set for each segmented QR code picture to indicate the order of each segmented QR code picture. If the size of the signed configuration profile for the QR coding is 20 KB, the configuration profile would be encoded in hexadecimal and segmented into 20 QR code pictures, wherein each QR code picture is numbered as 1 to 20, respectively.

At step 208, the hotspot device encodes each of the numbered segmented profiles to generate an encoded picture for each of the numbered segmented profiles, respectively.

At step 209, the hotspot device displays the encoded picture for each of the numbered segmented profiles cyclically with a periodicity, such that the signed configuration profile is obtained by a user terminal device according to the encoded pictures.

Taking the QR code as an example for illustration, the hotspot device periodically displays all of the QR code pictures in the order of the number of each segmented profile. The display frequency for the QR code pictures may be higher than the frequency recognizable by human eyes, and the display is performed cyclically with a periodicity to increase recognition efficiency. The QR code picture may be displayed on a screen of the hotspot device.

At step 210, a second terminal device obtains a video stream of the encoded pictures for all of the segmented profiles.

In an embodiment of the present disclosure, a method of photographing with a camera may be used for transmitting the QR code picture or a custom information picture. The second terminal device turns on its camera to photograph the encoded pictures to obtain the video streams of the encoded pictures for all of the segmented files. The longer the photographing time, the more encoded pictures are obtained, and the better the recognition effect is.

Since the hotspot device displays the multiple encoded pictures cyclically with a periodicity, and the display frequency is higher than the frequency recognizable by human eyes, two cycles may be obtained during the photographing process. Therefore, picture frames with better quality may be selected from the picture frames in the two cycles for identification of encoded pictures.

The second terminal device supports WiFi and video functions, and it may be a mobile phone or a tablet computer supporting WiFi and video functions, or may be other device supporting WiFi and video functions, which is not limited in an embodiment of the present disclosure.

At step 211, the second terminal device processes the video stream to obtain all of the encoded pictures.

The second terminal device decomposes the video stream into picture frames and resolves a plurality of encoded pictures from the picture frames. The video stream refers to transmission of video data.

The second terminal device may use a method in existing art to process the video stream. The encoded picture may be a picture of QR code.

At step 212, the second terminal device decodes each encoded picture to obtain the segmented profile of each encoded picture.

At step 213, the second terminal device assembles all of the segmented profiles to obtain a complete signed configuration profile.

The second terminal device decodes each encoded picture to obtain a segmented file. A segmented profile is assembled according to an order of the number, and a complete signed configuration profile may be obtained.

At step 214, the second terminal device installs the signed configuration profile.

After the second terminal device installs the signed configuration profile, the second terminal device may obtain the SSID and password information of a hotspot and connect to the hotspot.

At step 215, the second terminal device obtains the SSID and the password according to the signed configuration profile, and connects to the WiFi hotspot.

The configuration profile is a file in XML format recognizable by the iOS system. The XML file contains multiple fields of WiFi information. These fields contain information such as the SSID and the password of a WiFi hotspot, which may enable connection to the WiFi hotspot once being installed by the second terminal device.

According to the information processing method provided by the embodiment of the present disclosure, the data required by a user terminal is signed by a server, and then the data is downloaded and decomposed into a plurality of encoded pictures by a device supporting WiFi. Thereby, data required by the user terminal can be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of networking.

### Embodiment 3

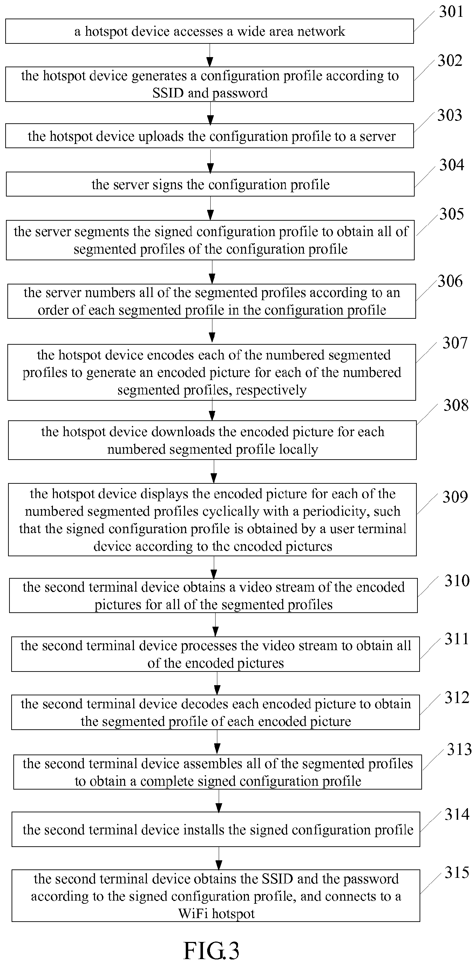

An embodiment of the present disclosure provides an information processing method. As illustrated in FIG. 3, the method may include the following steps 301 to 315.

At step 301, a hotspot device accesses a wide area network.

At step 302, the hotspot device generates a configuration profile according to SSID and password.

At step 303, the hotspot device uploads the configuration profile to a server.

The server in the embodiment of the present disclosure may be a cloud server.

At step 304, the server signs the configuration profile.

At step 305, the server segments the signed configuration profile to obtain all segmented profiles of the configuration profile.

Taking a QR code as an example for illustration, the server segments the configuration profile for QR coding according to the size of the signed configuration profile for the QR coding to obtain multiple segmented profiles, i.e., multiple picture files for QR code.

At step 306, the server numbers all of the segmented profiles according to an order of each segmented profile in the configuration profile.

The server sets an order number for each segmented QR code picture to indicate the order of each segmented QR code picture.

At step 307, the server encodes each of the numbered segmented profiles to generate an encoded picture for each of the numbered segmented profiles, respectively.

At step 308, the hotspot device downloads the encoded picture for each numbered segmented profile locally.

At step 309, the hotspot device displays the encoded picture for each of the numbered segmented profiles cyclically with a periodicity, such that the signed configuration profile is obtained by a terminal device according to the encoded pictures.

Taking the QR code as an example, the hotspot device periodically displays all of the QR code pictures in the order of the number of each segmented profile. The display frequency for the QR code pictures may be higher than the frequency recognizable by human eyes, and the display is performed cyclically with a periodicity to increase recognition efficiency. The QR code pictures may be displayed on a screen of the hotspot device.

At step 310, a second terminal device obtains a video stream of the encoded pictures for all of the segmented profiles.

At step 311, the second terminal device processes the video stream to obtain all of the encoded pictures.

At step 312, the second terminal device decodes each encoded picture to obtain the segmented profile of each encoded picture.

At step 313, the second terminal device assembles all of the segmented profiles to obtain a complete signed configuration profile.

At step 314, the second terminal device installs the signed configuration profile.

At step 315, the second terminal device obtains SSID and password according to the signed configuration profile, and connects to a WiFi hotspot.

The second terminal device in an embodiment of the present disclosure may photograph the hotspot device to obtain the video stream of the encoded pictures, wherein the longer the photographing time, the better the recognition effect is. After the photographing is completed, the video stream is decomposed into picture frames, and multiple encoded pictures are resolved from the picture frames. Then the multiple encoded pictures are separately decoded to obtain the segmented files. A complete signed configuration profile may be obtained by assembling the segmented profiles according to the order of the number of the segmented profiles in the encoded picture. By installing the configuration profile, the iOS can obtain the SSID and password information of a hotspot and then connect to a WiFi hotspot. Since the hotspot device displays multiple encoded pictures cyclically with a periodicity, and the display frequency is higher than the frequency recognizable by human eyes, two cycles may be obtained during the photographing process. Therefore, picture frames with better quality may be selected from the picture frames in the two cycles for identification of encoded pictures.

For understanding of the information processing method provided in the embodiment of the present disclosure, reference may be made to the description of the information processing methods in Embodiment 1 and Embodiment 2, which will not be described herein again in this embodiment.

According to the information processing method provided by the embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 4

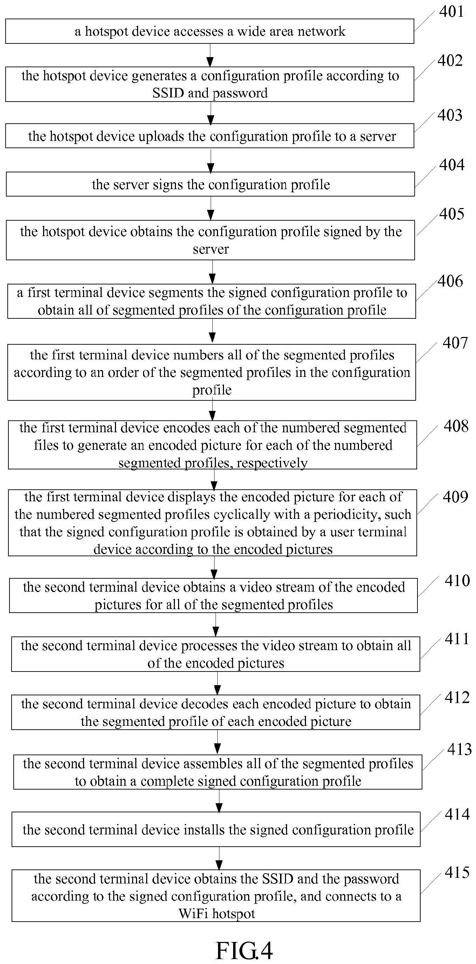

An embodiment of the present disclosure provides an information processing method. As illustrated in FIG. 4, the method may include the following steps 401 to 415.

At step 401, a hotspot device accesses the wide area network.

At step 402, the hotspot device generates a configuration profile according to SSID and password.

At step 403, the hotspot device uploads the configuration profile to a server.

At step 404, the server signs the configuration profile.

At step 405, the hotspot device obtains the configuration profile signed by the server.

The hotspot device downloads the signed configuration profile locally.

At step 406, a first terminal device segments the signed configuration profile to obtain all segmented profiles of the configuration profile.

Taking the QR code as an example, the first terminal device segments the configuration profile for the QR coding according to the size of the signed configuration profile for the QR coding to obtain multiple segmented profiles, i.e., multiple picture files for QR code.

At step 407, the first terminal device numbers all of the segmented profiles according to an order of the segmented profiles in the configuration profile.

The first terminal device sets an order number for each segmented QR code picture to indicate the order of each segmented QR code picture.

Exemplarily, the size of the signed configuration profile for the QR coding is 20 KB, and the configuration profile is encoded in hexadecimal and segmented into 20 QR code pictures, wherein each QR code picture is numbered as 1 to 20, respectively.

At step 408, the first terminal device encodes each of the numbered segmented files to generate an encoded picture for each of the numbered segmented profiles respectively.

At step 409, the first terminal device displays the encoded picture for each of the numbered segmented profiles cyclically with a periodicity, such that the signed configuration profile is obtained by a user terminal device according to the encoded picture.

Taking the QR code as an example, the first terminal device periodically displays all of the QR code pictures in the order of the number of each segmented profile. The display frequency for the QR code pictures may be higher than the frequency recognizable by human eyes, and the display is performed cyclically with a periodicity to increase recognition efficiency. The QR code pictures may be displayed on a screen of the first terminal device.

At step 410, a second terminal device obtains a video stream of the encoded pictures for all of the segmented profiles.

At step 411, the second terminal device processes the video stream to obtain all of the encoded pictures.

At step 412, the second terminal device decodes each encoded picture to obtain the segmented profile of each encoded picture.

At step 413, the second terminal device assembles all of the segmented profiles to obtain a complete signed configuration profile.

At step 414, the second terminal device installs the signed configuration profile.

At step 415, the second terminal device obtains SSID and password according to the signed configuration profile, and connects to a WiFi hotspot.

The second terminal device in the embodiment of the present disclosure can photograph the first terminal device to obtain the video stream of the encoded pictures, wherein the longer the photographing time, the better the recognition effect is. After the photographing is completed, the video stream is decomposed into picture frames, and multiple encoded pictures are resolved from the picture frames. Then multiple encoded pictures are separately decoded to obtain the segmented files. A complete signed configuration profile may be obtained by assembling the segmented profiles according to the order of the number of the segmented profiles in the encoded picture. By installing the configuration profile, the iOS can obtain the SSID and password information of a hotspot and then connect to WiFi. Since the first terminal device displays multiple encoded pictures cyclically with a periodicity, and the display frequency is higher than the frequency recognizable by human eyes, two cycles may be obtained during the photographing process. Therefore, picture frames with better quality may be selected from the picture frames in the two cycles for identification of encoded pictures.

For understanding of the information processing method provided in the embodiment of the present disclosure, reference may be made to the description of the information processing methods in Embodiment 1 and Embodiment 2, which will not be described herein again in this embodiment.

According to the information processing method provided by the embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 5

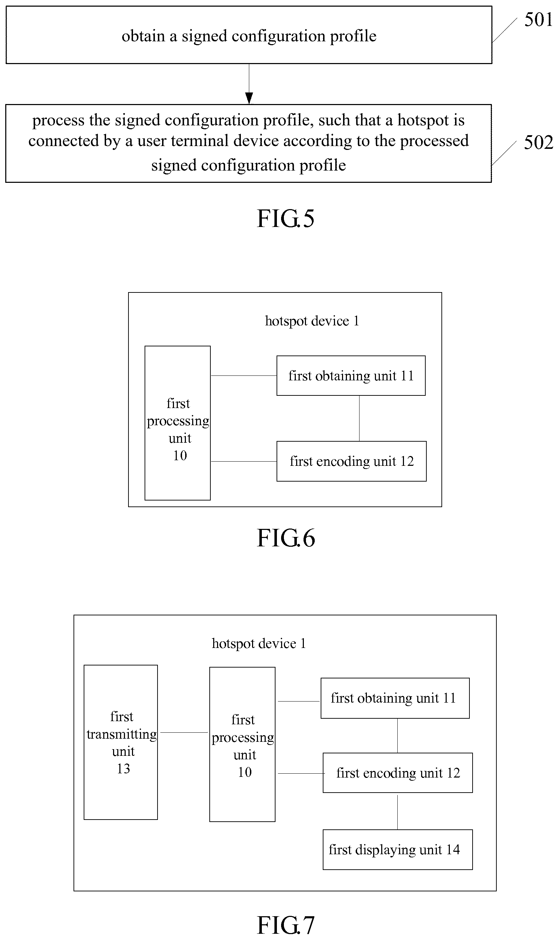

An embodiment of the present disclosure provides an information processing method. As illustrated in FIG. 5, the method may include the following steps 501 to 502.

At step 501, a signed configuration profile is obtained.

It should be noted that, an execution body of the information processing method provided in an embodiment of the present disclosure may be an information processing device. The information processing device may be a hotspot device, or may be a server, or may be a first terminal device that can communicate with a server.

At step 502, the signed configuration profile is processed, such that a hotspot is connected by a user terminal device according to the processed signed configuration profile.

Processing the signed configuration profile may include: segmenting a signed configuration profile to obtain all segmented profiles of the configuration profile; numbering all of the segmented profiles according to an order of each segmented profile in the configuration profile; and encoding each of the numbered segmented profiles to generate an encoded picture for each of the numbered segmented profiles. respectively. For understanding of the information processing by segmenting processing, reference may be made to the description of the information processing methods in Embodiment 1 to Embodiment 4, which will not be described again in this embodiment.

It should be noted that, other methods may be used by the information processing device to process the signed configuration profile, such that a WiFi hotspot is connected by the user terminal device according to the signed configuration profile.

According to the information processing method provided by the embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 6

An embodiment of the present disclosure provides a hotspot device 1. As illustrated in FIG. 6, the hotspot device 1 includes: a first processing unit 10, a first obtaining unit 11, and a first encoding unit 12.

The first processing unit 10 is configured to segment a configuration profile.

The first obtaining unit 11 is configured to obtain all segmented profiles of the configuration profile.

The first processing unit 10 is further configured to number all of the segmented profiles according to an order of each segmented profile in the configuration profile.

The first encoding unit 12 is configured to encode each of the numbered segmented profiles to generate an encoded picture for each of the numbered segmented profiles, respectively.

Optionally, the first obtaining unit 11 is further configured to obtain the configuration profile signed by a server.

Optionally, as illustrated in FIG. 7, the hotspot device 1 further includes a first transmitting unit 13.

The first processing unit 10 is further configured to generate the configuration profile according to a service set identifier (SSID) and a password.

The first transmitting unit 13 is configured to upload the configuration profile to the server, such that the configuration profile is signed by the server.

Optionally, as illustrated in FIG. 7, the hotspot device 1 further includes: a first displaying unit 14 configured to display the encoded picture for each of the numbered segmented profiles cyclically with a periodicity, such that the signed configuration profile is obtained by a user terminal device according to the encoded pictures.

For understanding of the hotspot device provided in the embodiment of the present disclosure, reference may be made to the description of the information processing methods in Embodiment 1 and Embodiment 2, which will not be described again in this embodiment.

According to the hotspot device provided by the embodiment of the present disclosure, the required by a user terminal is signed by a server, and then the data is downloaded and decomposed into a plurality of encoded pictures by a device supporting WiFi. Thereby, data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 7

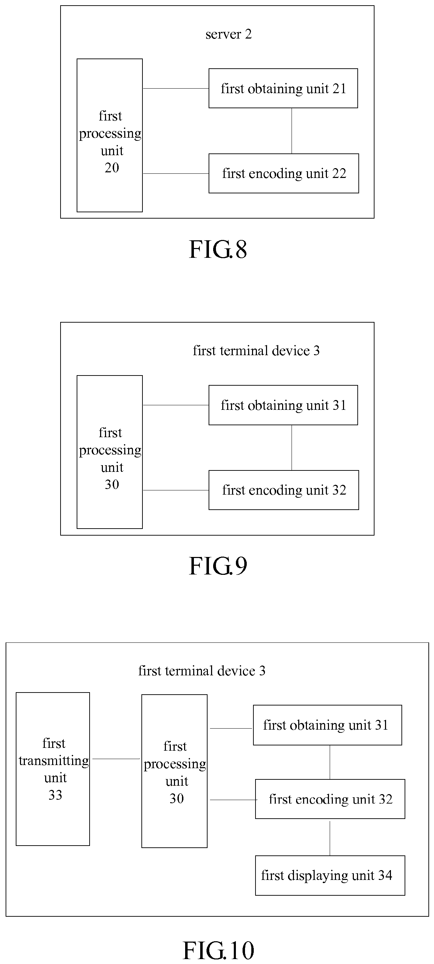

An embodiment of the present disclosure provides a server 2. As illustrated in FIG. 8, the server 2 includes: a first processing unit 20, a first obtaining unit 21, and a first encoding unit 22.

The first processing unit 20 is configured to segment a configuration profile.

The first obtaining unit 21 is configured to obtain all segmented profiles of the configuration profile.

The first processing unit 20 is further configured to number all of the segmented profiles according to an order of each segmented profile in the configuration profile.

The first encoding unit 22 is configured to encode each of the numbered segmented profiles to generate an encoded picture for each of the numbered segmented profiles, respectively.

Optionally, the first obtaining unit 21 is further configured to obtain the configuration profile and sign the configuration profile.

For understanding of the server provided in an embodiment of the present disclosure, reference may be made to the description of the information processing methods in Embodiment 1 and Embodiment 3, which will not be described again in this embodiment.

According to the server provided by the embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 8

An embodiment of the present disclosure provides a first terminal device 3. As illustrated in FIG. 9, the first terminal device 3 includes: a first processing unit 30, a first obtaining unit 31, and a first encoding unit 32.

The first processing unit 30 is configured to segment a configuration profile.

The first obtaining unit 31 is configured to obtain all segmented profiles of the configuration profile.

The first processing unit 30 is further configured to number all of the segmented profiles according to an order of each segmented profile in the configuration profile.

The first encoding unit 32 is configured to encode each of the numbered segmented profiles to generate an encoded picture for each of the numbered segmented profiles, respectively.

Optionally, the first obtaining unit 31 is further configured to obtain a configuration profile signed by a server.

Optionally, as illustrated in FIG. 10, the first terminal device 3 further includes a first transmitting unit 33.

The first processing unit 30 is further configured to generate the configuration profile according to a service set identifier (SSID) and a password.

The first transmitting unit 33 is configured to upload the configuration profile to the server, such that the configuration profile is signed by the server.

Optionally, as illustrated in FIG. 10, the first terminal device 3 further includes a first displaying unit 34 configured to display the encoded picture for each of the numbered segmented profiles cyclically with a periodicity, such that the signed configuration profile is obtained by a user terminal device according to the encoded pictures.

For understanding of the first terminal device provided in the embodiment of the present disclosure, reference may be made to the description of the information processing methods in Embodiment 1 and Embodiment 4, which will not be described again in this embodiment.

According to the first terminal device provided by an embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 9

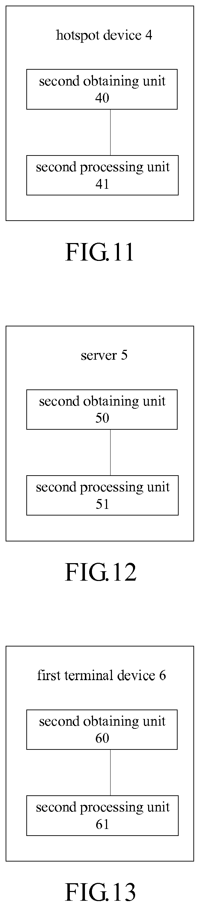

An embodiment of the present disclosure provides a hotspot device 4. As illustrated in FIG. 11, the device 4 includes: a second obtaining unit 40 and a second processing unit 41.

The second obtaining unit 40 is configured to obtain a signed configuration profile.

The second processing unit 41 is configured to process the signed configuration profile, such that a hotspot is connected by the user terminal device according to the processed signed configuration profile.

Optionally, the second processing unit 41 is configured to: segment the signed configuration profile to obtain all segmented profiles of the configuration profile; number all of the segmented profiles according to an order of each segmented profile in the configuration profile; and encode each of the numbered segmented profiles to generate an encoded picture for each of the numbered segmented profiles, respectively.

For understanding of the hotspot device provided in the embodiment of the present disclosure, reference may be made to the description of the information processing methods in Embodiment 1 to Embodiment 5, which will not be described again in this embodiment.

According to the hotspot device provided by the embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 10

An embodiment of the present disclosure provides a server 5. As illustrated in FIG. 12, the server 5 includes: a second obtaining unit 50 and a second processing unit 51.

The second obtaining unit 50 is configured to obtain a signed configuration profile.

The second processing unit 51 is configured to process the signed configuration profile, such that a hotspot is connected by the user terminal device according to the processed signed configuration profile.

Optionally, the second processing unit 51 is configured to: segment the signed configuration profile to obtain all segmented profiles of the configuration profile; number all of the segmented profiles according to an order of each segmented profile in the configuration profile; and encode each of the numbered segmented profiles to generate an encoded picture for each of the numbered segmented profiles, respectively.

For understanding of the server provided in the embodiment of the present disclosure, reference may be made to the description of the information processing methods in Embodiment 1 to Embodiment 5, which will not be described again in this embodiment.

According to the server provided by the embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

### Embodiment 11

An embodiment of the present disclosure provides a first terminal device 6. As illustrated in FIG. 13, the first terminal device 6 includes: a second obtaining unit 60 and a second processing unit 61.

The second obtaining unit 60 is configured to obtain a signed configuration profile.

The second processing unit 61 is configured to process the signed configuration profile, such that a hotspot is connected by the user terminal device according to the processed signed configuration profile.

Optionally, the second processing unit 61 is configured to: segment the signed configuration profile to obtain all segmented profiles of the configuration profile; number all of the segmented profiles according to an order of each segmented profile in the configuration profile; and encode each of the numbered segmented profiles to generate an encoded picture for each of the numbered segmented profiles, respectively.

For understanding of the first terminal device provided by the embodiment of the present disclosure, reference may be made to the description of the information processing methods of Embodiment 1 to Embodiment 5, which will not be described again in this embodiment.

According to the first terminal device provided by the embodiment of the present disclosure, data required by a user terminal is signed by a server, and then the data is downloaded and decomposed into a plurality of encoded pictures by a device supporting WiFi. Thereby, the data required by the user terminal may be resolved through capturing a plurality of encoded pictures by the user terminal. In this case, interaction between the user terminal and the server is not needed, and consequently, consume of traffic by the user terminal is not needed either. Thus, the user terminal can obtain the configuration profile to access a WiFi hotspot in the absence of a network connection.

An embodiment of the present disclosure further provides a computer-readable storage medium storing computer executable instructions for implementing the information processing method in Embodiment 1 when executed.

An embodiment of the present disclosure further provides a computer-readable storage medium storing computer executable instructions for implementing the information processing method in Embodiment 5 when executed.

Those skilled in the art should understand that the embodiments of the present disclosure may be provided as a method, a system, or a computer program product. Thus, the present application may be implemented as hardware, software, or a combination of software and hardware. Moreover, the present application may be implemented as a computer program product embodied on one or more computer-readable storage media (including but not limited to a disk storage, an optical storage, etc.) having computer executable program code embodied therein.

This application is described with reference to flowcharts and/or block diagrams of methods, apparatuses (systems), and computer program products according to embodiments of the present disclosure. It should be understood that, each flow and/or block in the flowcharts and/or block diagrams, and combinations of the flows and/or blocks in the flowcharts and/or block diagrams may be implemented by computer program instructions. The computer program instructions may be provided to a processor of a general purpose computer, a dedicated application computer, an embedded processor, or other programmable data processing device to generate a machine, such that instructions executed by a processor of a computer or other programmable data processing device may generate a device for implementing the functions specified in one or more flows of a flowchart and/or one or more blocks of a block diagram.

The computer program instructions may also be stored on a computer-readable memory capable of directing a computer or other programmable data processing device to operate in a specific manner, such that instructions stored in the computer-readable memory may generate an article of manufacture including a device can operate with instructions. The device can operate with instructions implements the functions specified in one or more flows of a flowchart and/or one or more blocks of a block diagram.

These computer program instructions can also be loaded onto a computer or other programmable data processing device, causing a series of operational steps to be performed on the computer or other programmable device to generate computer implemented processes, such that the instructions executed on a computer or other programmable device provide steps for implementing the functions specified in one or more flows of a flowchart and/or one or more blocks of a block diagram.

The embodiments described above are merely exemplary embodiments of the present application, and is not intended to limit the protection scope of the present application.

## Claims

1. An information processing method, comprising:
segmenting a configuration profile to obtain all segmented profiles of the configuration profile;
numbering all of the segmented profiles according to an order of each segmented profile in the configuration profile; and
encoding each of the numbered segmented profiles to generate an encoded picture for each of the numbered segmented profiles, respectively.

2. The information processing method of claim 1, **characterized in that** before the step of segmenting the configuration profile to obtain all of the segmented profiles of the configuration profile, the method further comprising:
obtaining the configuration profile signed by a server.

3. The information processing method of claim 2, **characterized in that** before the step of obtaining the configuration profile signed by the server, the method further comprising:
generating the configuration profile according to a service set identifier, called SSID, and a password, and uploading the configuration profile to the server, such that the configuration profile is signed by the server.

4. The information processing method of any one of claims 1 to 3, **characterized in that** after the step of encoding each of the numbered segmented profiles to generate an encoded picture for each of the numbered segmented profiles, respectively, the method further comprising:
displaying the encoded picture for each of the numbered segmented profiles cyclically with a periodicity, such that the signed configuration profile is obtained by a user terminal device according to the encoded pictures.

5. The information processing method of claim 1, **characterized in that** before the step of segmenting the configuration profile to obtain all of the segmented profiles of the configuration profile, the method further comprising:
obtaining the configuration profile and signing the configuration profile.

6. An information processing method, comprising:
obtaining a signed configuration profile, and processing the signed configuration profile, such that a hotspot is connected by a user terminal device according to the processed signed configuration profile.

7. The information processing method of claim 6, **characterized in that** the step of processing the signed configuration profile comprising:
segmenting the signed configuration profile to obtain all segmented profiles of the configuration profile;
numbering all of the segmented profiles according to an order of each segmented profile in the configuration profile; and
encoding each of the numbered segmented profiles to generate an encoded picture for each of the numbered segmented profiles, respectively.

8. A hotspot device, comprising: a first processing unit, a first obtaining unit, and a first encoding unit, **characterized in that**:
the first processing unit is configured to segment a configuration profile;
the first obtaining unit is configured to obtain all segmented profiles of the configuration profile;
the first processing unit is further configured to number all of the segmented profiles according to an order of each segmented profile in the configuration profile; and
the first encoding unit is configured to encode each of the numbered segmented profiles to generate an encoded picture for each of the numbered segmented profiles, respectively.

9. The hotspot device of claim 8, **characterized in that** the first obtaining unit is further configured to obtain the configuration profile signed by a server.

10. The hotspot device of claim 9, further comprising: a first transmitting unit,
**characterized in that** the first processing unit is further configured to generate the configuration profile according to a service set identifier (SSID) and a password; and
the first transmitting unit is configured to upload the configuration profile to the server, such that the configuration profile is signed by the server.

11. The hotspot device of any one of claims 8 to 10, **characterized in that** the hotspot device further comprising: a first displaying unit configured to display the encoded picture for each of the numbered segmented profiles cyclically with a periodicity, such that the signed configuration profile is obtained by a user terminal device according to the encoded pictures.

12. A server, comprising: a first processing unit, a first obtaining unit, and a first encoding unit, **characterized in that**
the first processing unit is configured to segment a configuration profile;
the first obtaining unit is configured to obtain all segmented profiles of the configuration profile;
the first processing unit is further configured to number all of the segmented profiles according to an order of each segmented profile in the configuration profile; and
the first encoding unit is configured to encode each of the numbered segmented profiles to generate an encoded picture for each of the numbered segmented profiles, respectively.

13. The server of claim 12, **characterized in that** the first obtaining unit is further configured to obtain the configuration profile and sign the configuration profile.

14. A hotspot device, comprising: a second obtaining unit and a second processing unit, **characterized in that**
the second obtaining unit is configured to obtain a signed configuration profile; and
the second processing unit is configured to process the signed configuration profile, such that a hotspot is connected by a user terminal device according to the processed signed configuration profile.

15. The hotspot device of claim 14, **characterized in that** the second processing unit is configured to: segment a signed configuration profile to obtain all segmented profiles of the configuration profile; number all of the segmented profiles according to an order of each segmented profile in the configuration profile; and encode each of the numbered segmented profiles to generate an encoded picture for each of the numbered segmented profiles respectively.

16. A server, comprising: a second obtaining unit and a second processing unit, **characterized in that**
the second obtaining unit is configured to obtain a signed configuration profile; and
the second processing unit is configured to process the signed configuration profile, such that a hotspot is connected by the user terminal device according to the processed signed configuration profile.

17. The server of claim 16, **characterized in that** the second processing unit is configured to: segment the signed configuration profile to obtain all segmented profiles of the configuration profile; number all of the segmented profiles according to an order of each segmented profile in the configuration profile; and encode each of the numbered segmented profiles to generate an encoded picture for each of the numbered segmented profiles, respectively.
